# EUROPÄISCHE PATENTSCHRIFT

(11) **EP 3 209 917 B1**
(45) Veröffentlichungstag und Bekanntmachung des Hinweises auf die Patenterteilung: **19.09.2018**
(21) Anmeldenummer: 15791498.7
(22) Anmeldetag: 14.10.2015
(51) Int. Cl.: F16K 31/40

(54) **VORGESTEUERTES WEGEVENTIL**
PILOT-OPERATED DIRECTIONAL CONTROL VALVE
DISTRIBUTEUR À COMMANDE ASSISTÉE

(30) Priorität: 22.10.2014 DE 102014015704
(43) Veröffentlichungstag der Anmeldung: 30.08.2017
(73) Patentinhaber: Hydac Fluidtechnik GmbH, 66280 Sulzbach/Saar (DE)
(72) Erfinder: SCHULZ, Frank, 66440 Blieskastel-Bierbach (DE); BILL, Markus, 66265 Heusweiler (DE)
(74) Vertreter: Bartels und Partner, Patentanwälte
(86) Internationale Anmeldenummer: PCT/EP2015/002027
(87) Internationale Veröffentlichungsnummer: WO 2016/062383

(56) Entgegenhaltungen:
- DE-A1- 10 106 892
- US-A- 5 938 170
- US-A1- 2004 195 532
- US-A1- 2005 016 168
- US-A1- 2007 169 826
- US-A1- 2007 290 152
- US-A1- 2010 155 633

## Beschreibung

Die Erfindung betrifft ein vorgesteuertes Wegeventil, insbesondere Wegesitzventil, mit den Merkmalen im Oberbegriff von Anspruch 1.

Durch die DE 10 2009 051 574 A1 ist ein Magnetventil für die Ansteuerung eines Fluids bekannt, mit einem ersten Gehäuseteil mit einer Axialführung für einen Magnetanker, der unter der Wirkung einer, das erste Gehäuseteil nach außen hin zumindest teilweise umgebenden Magnetspule in der Axialführung verschiebbar ist, mit einem Energiespeicher, und mit eine, ein Ventilschließglied beaufschlagenden Betätigungsteil. Dadurch, dass bei der bekannten Lösung das Ventilschließglied ein Rückschlagventil für eine Ansteuerung einer Bypassbohrung in dem Ventilschließglied aufweist, dessen ein Rückschlagventil-Schließglied aufnehmendes und dieses bewegbar haltendes Gehäuse einstückig mit dem Ventilschließglied gebildet ist und dass das Gehäuse aufgrund einer Gestaltsänderung nach Einsetzen des Rückschlagventil-Schließgliedes dieses in seiner jeweiligen Funktionsstellung hält, ist ein solches Magnetventil aufgrund der vorstehend beschriebenen konstruktiven Gestaltung des Rückschlagventil-Gehäuses vereinfacht ausführbar, insbesondere in Bezug auf die erforderlichen Fertigungstoleranzen.

Die bekannte Magnetventillösung weist eine Hauptsteuerstufe und eine die Hauptsteuerstufe ansteuernde Vorsteuerstufe auf, die über den Magnetanker als Teil eines Magnet-Betätigungssystems betätigbar ist. Solche Magnet- oder Wegeventile werden grundsätzlich in Fluidsystemen zur Steuerung von Volumenströmen eingesetzt. Dabei sind vorgesteuerte Wegeventile besonders gut geeignet, wenn man hohe Drücke und hohe Volumenströme schalten will, da die Strömungskräfte und Reibungskräfte weitestgehend kompensiert werden können. Insgesamt erreicht man durch die Nutzung einer Vorsteuerstufe für die Hauptsteuerstufe ein sehr gutes Verhältnis aus Bauraum und Durchflusswiderstand im Sinne, dass ein hohes Leistungsvermögen bei kleinem Bauraum realisierbar ist. Weiterhin kann man durch die Vorsteuerung die Schaltzeit der Ventile beeinflussen. Vorgesteuerte Wegeventile in Sitzausführung führen zu kostengünstigen Ventilen bei gleichzeitig hoher hydraulischer Leistung.

Heute werden üblicherweise vorgesteuerte Wegeventile, wie auch in der DE 10 2009 051 574 A1 aufgezeigt, mit einer Vorsteuer-Ventilstufe versehen, um die entsprechende Schaltleistung erreichen zu können. Regelmäßige Anforderungen sind dabei ein hoher Druck von beispielsweise > 350 bar und ein hoher Volumenstrom, beispielsweise >200 l/min bei einer Druckdifferenz von etwa 5 bar. Gerade, wenn die Anwendungen eine sehr hohe Dynamik erfordern, wie sie z.B. bei Notfunktionen oder Leistungs-Trennschaltern benötigt wird, wird eine sehr hohe Ventildynamik verlangt.

Die vorstehend näher bezeichnete, bekannte Magnetventillösung ist in der Art einer Einschraubpatrone oder Cartridge-Ventillösung für den Einbau in einen Gesamt-Ventilblock konzipiert, so dass die bekannte Lösung vorteilhaft und bauraumsparend in der Art eines modularen Ventilkonzepts einsetzbar ist; allein, was die Wünsche nach einer hohen Schaltleistung und einer hohen Ventildynamik anbelangt, lässt die bekannte Lösung noch Wünsche offen.

Die US 2005/0016168 A1 beschreibt ein gattungsgemäßes vorgesteuertes Wegeventil, insbesondere Wegesitzventil, mit einem Ventilgehäuse, mit mindestens drei Fluidanschluss-Stellen mit einer Hauptsteuerstufe und einer Vorsteuerstufe, wobei zwischen der Hauptsteuerstufe und der Vorsteuerstufe eine weitere fluidsteuernde Zwischenstufe angeordnet ist, wobei die Hauptsteuerstufe einen längsverfahrbaren Hauptsteuerkolben und die Vorsteuerstufe einen längsverfahrbaren Vorsteuerkolben aufweist, wobei die Zwischenstufe einzelne Kanalabschnitte aufweist, die paarweise an einer Knick- oder sonstigen Umlenkstelle aufeinandertreffen, um dergestalt Platz für einen Mittenraum zu schaffen, der an die dritte Fluidanschluss-Stelle permanent fluidführend angeschlossen ist und der von einem Vorsteuerkolben der Vorsteuerstufe verschließbar ist.

Weitere Wegeventile gehen aus der US 2007/0169826 A1, der US 2004/ 0195532 A1, der US 5 938 170, der DE 101 06 892 A1, der US 2006/ 0290152 A1 und der US 2010/0155633 A1 hervor.

Ausgehend von diesem Stand der Technik liegt der Erfindung die Aufgabe zugrunde, ein vorgesteuertes Wegeventil zu schaffen, insbesondere in Form eines Wegesitzventils, das eine ausgesprochen hohe Schaltleistung und eine hohe Ventildynamik aufweist sowie funktionssicher im Gebrauch ist und sich kostengünstig herstellen lässt.

Eine dahingehende Aufgabe löst ein Wegeventil mit den Merkmalen des Patentanspruchs 1 in seiner Gesamtheit.

Gemäß dem Kennzeichen von Anspruch 1 ist vorgesehen, dass das Ventilgehäuse in der Art einer Einschraubpatrone in einem Ventilblock mit Fluidführungen aufnehmbar ist, die in fluidführende Deckung mit den Fluidanschluss-Stellen des Ventilgehäuses bringbar sind, in das die Zwischenstufe in der Art einer weiteren zweiten Einschraubpatrone integrierbar ist, dass die Vorsteuerstufe in der Art einer weiteren dritten Einschraubpatrone in der Zwischenstufe festlegbar ist und dass Wandteile eines Gehäuses der Vorsteuerstufe Teile des Mittenraums begrenzen, der von der unteren freien Stirnseite des Vorsteuerkolbens begrenzt ist, der dort mit den zugeordneten Gehäuseteilen der Vorsteuerstufe einen sitzdichten Ventilsitz ausbildet.

Dadurch, dass zwischen der Haupt- und der Vorsteuerstufe eine weitere fluidsteuernde Zwischenstufe angeordnet ist und dass die Haupt- und die Vorsteuerstufe einen längsverfahrbaren Hauptsteuerkolben bzw. einen Vorsteuerkolben aufweisen, lässt sich in bauraumsparender Weise ein Ventilkonzept realisieren, das eine Art dreistufigen Steuer-Aufbau hat, und dank der Zwischenstufe lassen sich sehr große Volumenströme über die Vorsteuerstufe beherrschen, so dass sich eine ausgesprochen hohe Ventildynamik erreichen lässt, insbesondere kann hemmnis- und im Wesentlichen widerstandsfrei das Fluid in Form von Hydrauliköl über die Zwischenstufe und die Vorsteuerstufe auf die Tankseite hin ausgeschoben werden. Durch die angesprochene Beherrschung großer Volumenströme ist mithin mit einem relativ klein aufbauenden dreistufigen Wegesitzventil eine sehr hohe Schaltleistung erreicht. Dies hat so keine Entsprechung im Stand der Technik.

Das Ventilgehäuse ist in der Art einer Einschraubpatrone in einem Ventilblock mit Fluidführungen aufnehmbar, die in fluidführende Deckung mit den Fluidanschluss-Stellen des Ventilgehäuses bringbar sind, in das die Zwischenstufe in der Art einer weiteren zweiten Einschraubpa-trone integrierbar ist, und wobei die Vorsteuerstufe in der Art einer weiteren dritten Einschraubpatrone in der Zwischenstufe festlegbar ist. Vorzugsweise ist dabei des Weiteren vorgesehen, dass die Durchmesser der jeweiligen Einschraub-Gewindestrecken ausgehend von dem Ventilgehäuse in Richtung der Vorsteuerstufe abnehmen.

Dergestalt ist ein insgesamt modular aufgebautes Einschraubpatronensystem in der sog. Cartridge-Ventilaufbautechnik erreicht, die einen modularen Aufbau der Einzelkomponenten des Wegeventils erlaubt in Form der Hauptsteuerstufe, der Vorsteuerstufe und der dazwischen befindlichen Zwischenstufe. Je nach angestrebtem Leistungsvermögen des Wegeventils lassen sich über die Einzelkomponenten in Form von Einschraubpatronen verschiedene Ventilkomponenten unterschiedlicher Leistungsauslegung zwanglos miteinander kombinieren, so dass in einem weiten Anwendungsbereich sich Fluidsteuerungsaufgaben funktionssicher und in kostengünstiger Weise beherrschen lassen.

Bei einer weiteren bevorzugten Ausführungsform der erfindungsgemäßen Wegeventillösung weist der Hauptkolben der Hauptkolbenstufe mindestens zwei Kanalführungen auf, die jeweils mit einem Ventil, vorzugsweise in Form eines Rückschlagventils versehen, den jeweils höchsten Fluiddruck von zwei Fluidanschluss-Stellen des Ventilgehäuses, die mittels des Hauptsteuerkolbens voneinander separierbar sind, in einen Entlastungsraum weiterleiten, der über die steuernde Zwischenstufe bei betätigter Vorsteuerstufe an die dritte Fluidanschluss-Stelle angeschlossen ist, die vorzugsweise einen Tank- oder Umgebungsdruck aufweist. Dergestalt lässt sich dann der jeweils höchste Druck über die Rückschlagventile auf die Rückseite des Hauptsteuerkolbens melden, der durch den genannten anstehenden Druck sowie gegebenenfalls unter Einfluss eines zusätzlichen Energiespeichers, beispielsweise in Form einer Druckfeder, in seinen Ventilsitz im Ventilgehäuse gedrückt wird. Die ansonsten fluidführende Verbindung zwischen den beiden Fluidanschluss-Stellen ist dann sitzdicht verschlossen.

Dergestalt ist über die Zwischenstufe in platzsparender Weise die Fluidführung über den jeweils relativ groß dimensionierbaren Umgehungskanal innerhalb der Zwischenstufe erreicht, so dass sich sehr hohe Fluidströme über die Vorsteuerstufe ansteuern lassen, was insoweit der eingeforderten hohen Schaltleistung und der hohen Ventildynamik entgegenkommt.

Weiter besonders vorteilhaft ist, dass die Flächenübersetzung von Hauptsteuer- und Vorsteuerkolben jeweils derart gewählt ist, dass die Summe der druckwirksamen Kolbenflächen auf der Vorderseite des jeweiligen Steuerkolbens der druckwirksamen Gesamtfläche auf der Rückseite dieses Steuerkolbens entspricht. Dergestalt wird in zwei Stufen eine insgesamt große Ventil-Öffnungsfläche erzeugt, wodurch der Fluiddruck schnell zusammenbricht, was wiederum der hohen Eigendynamik des erfindungsgemäßen Ventils zugute kommt.

Weitere vorteilhafte Ausführungsformen der erfindungsgemäßen Ventillösung sind Gegenstand der sonstigen Unteransprüche.

Im Folgenden wird die erfindungsgemäße Ventillösung anhand eines Ausführungsbeispiels nach der Zeichnung näher erläutert. Dabei zeigen in prinzipieller und nicht maßstäblicher Darstellung die
- Fig. 1: in der Art eines Längsschnittes das vorgesteuerte Wegeventil als Ganzes; und
- Fig. 2: in vergrößerter Darstellung einen kreisförmigen Ausschnitt aus der Längsschnittdarstellung nach der Fig. 1.

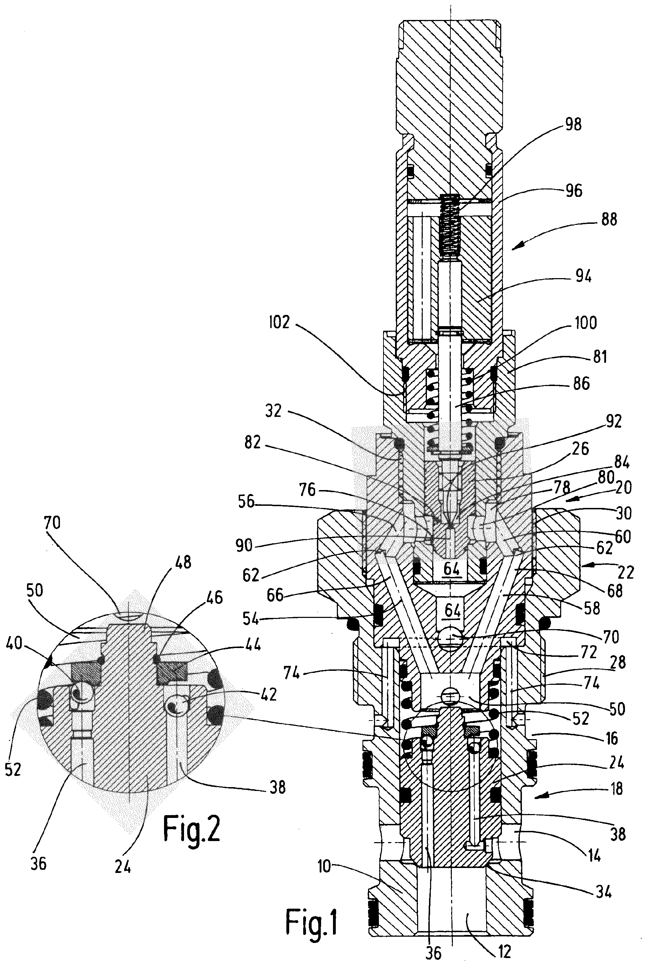

Das in Fig. 1 gezeigte vorgesteuerte Wegeventil ist in der Art eines Wegesitzventils konzipiert, das ein Ventilgehäuse 10 aufweist mit mindestens drei Fluidanschluss-Stellen 12, 14 und 16 und einer als Ganzes mit 18 bezeichneten Hauptsteuerstufe sowie einer als Ganzes mit 20 bezeichneten Vorsteuerstufe. Die Fluidanschluss-Stellen 12 und 14 können einmal einen Druckversorgungsanschluss ausbilden zwecks Anschließens einer Druckversorgungsquelle und zum anderen einen Verbraucheranschluss darstellen zwecks Anschließen eines hydraulischen Verbrauchers. In Abhängigkeit der jeweiligen Drucksituation betreffend die Druckversorgungsquelle und/oder den hydraulischen Verbraucher kann einmal am Fluidanschluss 12 der höhere Druck anstehen oder einmal am Fluidanschluss 14. Der weitere dritte Fluidanschluss 16 bildet einen Tank- oder Rücklaufanschluss aus, so dass insoweit an der Fluidanschluss-Stelle 16 ein Tank- oder Umgebungsdruck herrscht.

Zwischen der Hauptsteuerstufe 18 und der Vorsteuerstufe 20 ist eine als Ganzes mit 22 bezeichnete Zwischenstufe angeordnet und die Hauptsteuerstufe 18 sowie die Vorsteuerstufe 20 weisen einen längsverfahrbaren Hauptsteuerkolben 24 auf bzw. einen längsverfahrbaren Vorsteuerkolben 26. Ferner ist die Zwischenstufe 22, wie insbesondere die Fig. 1 zeigt, ortsfest im Ventilgehäuse 10 aufgenommen und zumindest teilweise mit ihrer Unterseite im Ventilgehäuse 10 integriert.

Das Ventilgehäuse 10 ist in der Art einer Einschraubpatrone in einem nicht dargestellten Ventilblock mit Fluidführungen aufnehmbar, die in fluidführende Deckung mit den jeweiligen Fluidanschluss-Stellen 12, 14, 16 des Ventilgehäuses 10 bringbar sind. Die Zwischenstufe 22 ist gleichfalls in der Art einer weiteren zweiten Einschraubpatrone ausgebildet, die in das Ventilgehäuse 10 in der Art der ersten Einschraubpatrone einsetzbar ist. Auch die Vorsteuerstufe 20 ist in der Art einer weiteren dritten Einschraubpatrone ausgebildet, die in der Zwischenstufe 22 festlegbar ist. Eine dahingehende Einschraubpatronenlösung wird fachsprachlich auch mit einem "Cartridge-Ventilaufbau" bezeichnet. Dabei nehmen die Durchmesser der jeweiligen Einschraubgewindestrecken 28, 30, 32 bei ungefähr gleicher axialer Einschraubstrecke, ausgehend von dem Ventilgehäuse 10 in Richtung der Vorsteuerstufe 20 ab. In Blickrichtung auf die Fig. 1 gesehen erweitert sich das Ventilgehäuse 10 von unten nach oben hin absatzweise und die einzelnen Fluidanschluss-Stellen 12, 14, 16 werden in üblicher und daher nicht mehr näher beschriebener Weise über ringförmige Dichtungen voneinander fluiddicht separiert, sobald das Ventilgehäuse 10 im nicht dargestellten Ventilblock eines Gesamt-hydraulischen-Systems einschraubend festgelegt ist.

Gemäß der Darstellung nach der Fig. 1 befindet sich der Hauptsteuerkolben 24 in seiner sitzdichten Schließstellung, bei der die beiden Fluidanschluss-Stellen 12, 14 fluiddicht voneinander separiert sind. Der Ventilsitz 34 ist dabei durch schräggestellte Anlageflächen an der unteren freien Stirnseite des Hauptsteuerkolbens 24 gebildet sowie aus den zuordenbaren Wandteilen des Ventilgehäuses 10, die die Fluidanschluss-Stelle 12 umfassen.

Der Hauptsteuerkolben 24 der Hauptsteuerstufe 18 weist mindestens zwei Kanalführungen 36, 38 auf, die jeweils mit einem Rückschlagventil 40, 42 versehen sind, was sich insbesondere aus der Darstellung nach der Fig. 2 ergibt. Dabei befindet sich in Blickrichtung auf die Fig. 1 und 2 gesehen das links dargestellte Rückschlagventil 40 mit seiner Ventilkugel in einer geöffneten fluiddurchlassenden Stellung, wohingegen das rechts dargestellte Rückschlagventil 42 mit seiner Schließkugel sich an einer Kugelaufnahme des Hauptsteuerkolbens 24 anliegend in der Schließstellung befindet. Damit die Ventilkugeln der Rückschlagventile 40, 42 in ihrer jeweils geöffneten Stellung die zugeordnete Kanalführung 36 bzw. 38 nicht verlassen können, ist endseitig eine scheibenartige Ventilbegrenzung 44 vorgesehen, die über einen Sprengring 46 am oberen freien Ende des Hauptsteuerkolbens 24 gehalten ist, der insoweit in einen zapfenförmigen Fortsatz 48 übergeht.

Die oberen freien Enden der beiden Kanalführungen 36, 38 münden in einen gemeinsamen Entlastungsraum 50 aus, der am unteren Ende der Zwischenstufe 22 von deren Gehäuseteilen zumindest teilweise umfasst ist. Ansonsten erstreckt sich in einem Außenbereich des Entlastungsraums 50 ein Energiespeicher in Form einer ersten Druckfeder 52, die sich mit ihrem einen freien oberen Ende an der im Ventilgehäuse 10 ortsfest angeordneten Zwischenstufe 22 abstützt und mit ihrem anderen unteren freien Ende an dem im Ventilgehäuse 10 längsverfahrbar geführten Hauptsteuerkolben 24. Ferner weist die Zwischenstufe 22 einzelne Kanalabschnitte 54, 56; 58, 60 auf, die paarweise an einer Knickstelle 62 aufeinandertreffen, um dergestalt Platz für einen Mittenraum 64 zu schaffen, der an die dritte Fluidanschluss-Stelle 16 permanent fluidführend angeschlossen ist, wobei der dahingehende Mittenraum 64 vom Vorsteuerkolben 26 der Vorsteuerstufe 20 und einem nachfolgend erläuterten Verschlusskörper eines Betätigungsteils 86 verschließbar ist.

Die über die einzelnen Kanalabschnitte 54, 56; 58, 60 insoweit gebildeten Umgehungskanäle 66, 68 umfassen "O-beinartig" den Mittenraum 64, der in Blickrichtung auf die Fig. 1 gesehen an seiner unteren Stelle einen Sammelkanal 70 aufweist, der in einen Querkanal 72 ausmündet, der wiederum endseitig permanent fluidführend an zwei Längskanäle 74 des Ventilgehäuses 10 angeschlossen ist, die in Blickrichtung auf die Fig. 1 gesehen an ihrem unteren Ende über eine Querführung in die dritte Fluidanschluss-Stelle 16 ausmünden, an der der Tank- oder Umgebungsdruck herrscht. Der Mittenraum 64 selbst ist durch eine Bohrung in der Zwischenstufe 22 gebildet, wobei die Bohrung in einen Abschnitt einmündet, der sich nach oben hin konisch erweitert, und der dahingehend konische Erweiterungsraum ist von der unteren freien Stirnseite des Gehäuses der Vorsteuerstufe 20 begrenzt. Die sich nach oben hin weiter anschließenden Wandteile des Gehäuses der Vorsteuerstufe 20 begrenzen wiederum Teile des Mittenraums 64, der gemäß der Darstellung nach der Fig. 1 nach oben hin von der unteren freien Stirnseite des Vorsteuerkolbens 26 begrenzt ist, der insoweit dort mit den zugeordneten Gehäuseteilen der Vorsteuerstufe 20 einen zweiten sitzdichten Ventilsitz 76 ausbildet.

Während gemäß der Darstellung nach der Fig. 1 die beiden Umgehungskanäle 66, 68 nach unten hin in den Entlastungsraum 50 ausmünden, münden sie mit ihrem anderen freien oberen Ende in einen Vorsteuerraum 78 der Vorsteuerstufe 20 aus. Ferner sei an dieser Stelle erwähnt, dass die Umgehungskanäle 66, 68 nicht nur, wie dargestellt, innerhalb der Zeichenebene verlaufen können, sondern vielmehr besteht grundsätzlich auch die Möglichkeit, dass diese aus der Zeichenebene heraus vorstehend zusätzliche Fluidführungen innerhalb der Zwischenstufe 22 ausbilden. Der Vorsteuerraum 78 geht innenumfangsseitig in Bohrungen 80 des Gehäuses der Vorsteuerstufe 20 über, deren freier Öffnungsquerschnitt von dem Vorsteuerkolben 26 mit vorgebbar ist.

Der dahingehende Vorsteuerkolben 26 weist im Bereich der Bohrungen 80 eine Blende oder Drossel 82 auf, die permanent fluidführend mit einem Kolbenraum 84 des Vorsteuerkolbens 26 verbunden ist, der von einem stangenförmigen Betätigungsteil 86 eines als Ganzes mit 88 bezeichneten Magnet-Betätigungssystems durchgriffen ist, bei dessen Betätigung ein fluidführender Weg zwischen Vorsteuerraum 78, Kolbenraum 84 und Mittenraum 64 der Zwischenstufe 22 freigegeben ist. Ferner weist der Vorsteuerkolben 26 an seiner einen freien Stirnseite, die dem Mittenraum 64 zugewandt ist, einen dahingehend ausmündenden Verbindungskanal 90 auf, der auf seiner dem Betätigungsteil 86 des Magnetsystems 88 zugewandten Seite in eine Blenden- oder Drosselstelle 92 ausmündet, der im unbetätigten Zustand des Magnet-Systems 88 von dem konisch zulaufenden Sperrkörper des Betätigungsteils 86 verschlossen ist. In diesem verschlossenen Zustand liegt der Sperrkörper des Betätigungsteils 86 dichtend an einem Ventilsitz der Drosselstelle 92 an, der einen dritten Ventilsitz des Wegeventils bildet.

Der Vorsteuerkolben 26 weist eine an den Vorsteuerraum 78 angrenzende Ringkolbenfläche 87 auf, an der infolge des an dieser anstehenden Druckes eine Kraft in den Vorsteuerkolben 26 eingeleitet wird. Diese Kraft ist einer Gegenkraft entgegengerichtet, die an der wirksamen rückseitigen Gesamtkolbenfläche des Vorsteuerkolbens 26 ansteht und aus dem innerhalb des Kolbenraumes 84 herrschenden Druck resultiert. Diese rückseitige Gesamtkolbenfläche setzt sich aus mehreren Kolbenflächen zusammen, zu denen
- die stirnseitige Ringfläche an der Rückseite des Vorsteuerkolbens 26,
- ein Anteil der Grundfläche eines von dem Betätigungsteil 86 durchgriffenen und gestuften Sacklochs im Vorsteuerkolben 26, und
- die an der Sacklochwand angeordneten und axial wirksamen Flächen zwischen der Grundfläche und der Ringfläche
zugehörig sind. Somit bildet sich die rückseitige Gesamtfläche aus der Kreisfläche am größten Außendurchmesser des Vorsteuerkolbens 26 abzüglich der theoretischen Kreisfläche, welche am dritten Ventilsitz vom Sperrkörper abgedichtet wird, so dass diese theoretische Kreisfläche nicht dem innerhalb des Kolbenraumes 84 herrschenden Druck ausgesetzt ist.

Das Magnet-System 88 weist einen Magnetanker 94 auf, der in einem Polrohrgehäuse 96 längsverfahrbar geführt ist. Der Magnetanker 94 stützt sich gegen einen weiteren Energiespeicher in Form einer Druckfeder 98 ab, so dass das Magnet-System 88 als sog. "ziehender Magnet" ausgeführt ist, d.h. bei Bestromen einer nicht näher dargestellten Betätigungsspule, die bei dahingehenden Magnet-Systemen 88 üblich ist, wird der Magnetanker 94 entgegen der Wirkung der Druckfeder 98 in Blickrichtung auf die Fig. 1 gesehen nach oben bewegt und nimmt dabei das mit ihm verbundene stangenartige Betätigungsteil 86 mit, so dass die am freien Ende angeordnete Verschlussspitze die Blenden- oder Drosselstelle 92 im Vorsteuerkolben 26 freigibt. Zusätzlich ist eine weitere Druckfeder 100 als Energiespeicher vorgesehen, um das Betätigungsteil 86 in seiner in Fig. 1 gezeigten Schließstellung zu halten. Das Magnet-System selbst ist über eine Einschraubstrecke 102 wiederum in Patronen- oder Cartridge-Bauweise im Ventilgehäuse 81 der Vorsteuerstufe 20 festgelegt, wobei insoweit der Durchmesser der zusätzlichen Einschraubstrecke 102 gegenüber den bisherigen Einschraubstrecken 28, 30, 32 gleichfalls wiederum im Durchmesser reduziert ist.

Für einen funktionssicheren Gebrauch des Wegeventils ist vorzusehen, dass die Flächenübersetzung von Hauptsteuerkolben 24 und Vorsteuerkolben 26 jeweils derart gewählt ist, dass die Summe der druckwirksamen Kolbenflächen auf der Vorderseite des jeweiligen Steuerkolbens der druckwirksamen Gesamtfläche auf der Rückseite dieses Steuerkolbens entspricht.

Um die Funktion des vorgesteuerten Wegeventils besser zu verstehen, wird ein üblicher Funktionsablauf im Folgenden näher beschrieben. Vom Anschluss 12 oder 14 kommend wird je nach Druckniveau der Druck über die Rückschlagventile 40, 42 auf die Rückseite des Hauptsteuerkolbens 24 gemeldet. Durch den dahingehend anstehenden Druck und durch die Kraft der Druckfeder 52 wird der Kolben 24 in seinen Ventilsitz 34 gedrückt und die ansonsten fluidführende Verbindung von Fluidanschluss 14 nach 16 ist dann sitzdicht verschlossen. Gleichzeitig wird der Druck über die Umgehungskanäle 66, 68 in Form von Schrägbohrungen vom Entlastungsraum 50 kommend in den Vorsteuerraum 78 der Vorsteuerstufe 20 weitergeleitet. Um die Vorsteuerstufe 20 zu öffnen, muss der Druck auf der Rückseite des Hauptsteuerkolbens 24 gesenkt werden, entsprechend den Kolbenflächen auf unter die Hälfte des Versorgungsdrucks von Anschluss 12 oder Anschluss 14. Dazu wird die Vorsteuerstufe 20 betätigt, indem der Verschlusskörper mittels des Magnet-Betätigungssystems 88 von seinem Ventilsitz, sprich dem dritten Ventilsitz, abgehoben wird. Da der unter hohem Druck stehende Kolbenraum 84 nunmehr mit dem lediglich unter Tankdruck stehenden Mittenraum 64 verbunden ist, bricht der Druck im Kolbenraum 84 zusammen. Infolgedessen fällt die den Kolben 26 in seine Schließrichtung drückende besagte Gegenkraft weg, so dass die Kraft infolge des an der Ringkolbenfläche teilweise noch anstehenden Druckes den Vorsteuerkolben 26 von seinem Ventilsitz 76, sprich dem zweiten Ventilsitz, abhebt. Dabei bewirkt die sehr enge Vorsteuerblende 82, dass der Druck innerhalb des Vorsteuerraumes 78 nicht so schnell zusammenbrechen kann, wie im Kolbenraum 84. Da der Strömungsquerschnitt am zweiten Ventilsitz 76 relativ groß ist, wird der Druck innerhalb des Entlastungsraums 50 sehr schnell abgebaut, so dass der Hauptsteuerkolben 24 von seinem Ventilsitz 34 kurzfristig relativ weit abhebt. Dabei kommt es zu einer fluidführenden Verbindung zwischen den Fluidanschluss-Stellen 12 und 14. Sowohl das von dem Hauptsteuerkolben 24 verdrängte Fluid als auch das durch die Kanalführungen 36, 38 strömende Fluid fließt ebenfalls über den großen Strömungsquerschnitt am zweiten Ventilsitz 76 zum Tank- und Rücklaufanschluss 16 hin. Bei betätigter Vorsteuerstufe 20 über das Magnet-System 88 bricht an der Vorsteuerblende 82 der Druck zusammen und somit auch im Vorsteuerraum 78. Insoweit ist der Mittenraum 64 dann über die dritte Fluidanschluss-Stelle 16 auf Tank- oder Umgebungsdruck hin entlastet mit der Folge, dass unter der Fluiddruckwirkung an den Fluidanschluss-Stellen 12 oder 14 der Hauptsteuerkolben 24 nunmehr im Wesentlichen nur gegen den Druck der Druckfeder 52 weiter nach oben fährt und damit einen grö-ßeren Verbindungsquerschnitt zwischen den Fluidanschluss-Stellen 12 und 14 freigibt.

Durch das angesprochene dreistufige Ventilkonzept kann mithin eine große Öffnungsfläche erzeugt werden, wodurch der Druck schnell zusammenbricht. Das Hydraulikmedium, welches durch die dritte Stufe in Form der Hauptsteuerstufe 18 verdrängt werden muss, kann mithin ohne großen Widerstand über die Vorsteuerstufe 20 und die Zwischenstufe 22 in Richtung zur Tankseite hin aus der Ventileinrichtung gebracht werden. Eine große Rolle spielt dabei auch, dass die jeweils eingesetzte Flächenübersetzung von Hauptsteuerkolben 24 und Vorsteuerkolben 26 vom Prinzip her in der Übersetzung gleich gewählt ist.

Das erfindungsgemäße Ventil kann aufgrund seiner dreistufigen Ausführung bei hoher Schaltleistung eine hohe Ventildynamik ermöglichen.

## Patentansprüche

1. Vorgesteuertes Wegeventil, insbesondere Wegesitzventil, mit einem Ventilgehäuse (10), mit mindestens drei Fluidanschluss-Stellen (12, 14, 16) mit einer Hauptsteuerstufe (18) und einer Vorsteuerstufe (20), wobei zwischen der Hauptsteuerstufe (18) und der Vorsteuerstufe (20) eine weitere fluidsteuernde Zwischenstufe (22) angeordnet ist, wobei die Hauptsteuerstufe (18) einen längsverfahrbaren Hauptsteuerkolben (24) und die Vorsteuerstufe (20) einen längsverfahrbaren Vorsteuerkolben (26) aufweist, wobei die Zwischenstufe (22) einzelne Kanalabschnitte (54, 56; 58, 60) aufweist, die paarweise an einer Knick- oder sonstigen Umlenkstelle (62) aufeinandertreffen, um dergestalt Platz für einen Mittenraum (64) zu schaffen, der an die dritte Fluidanschluss-Stelle (16) permanent fluidführend angeschlossen ist und der von dem einem Vorsteuerkolben (26) der Vorsteuerstufe (20) verschließbar ist, **dadurch gekennzeichnet, dass** das Ventilgehäuse (10) in der Art einer Einschraubpatrone in einem Ventilblock mit Fluidführungen aufnehmbar ist, die in fluidführende Deckung mit den Fluidanschluss-Stellen (12, 14, 16) des Ventilgehäuses (10) bringbar sind, in das die Zwischenstufe (22) in der Art einer weiteren zweiten Einschraubpatrone integrierbar ist, dass die Vorsteuerstufe (20) in der Art einer weiteren dritten Einschraubpatrone in der Zwischenstufe (22) festlegbar ist und dass Wandteile eines Gehäuses (81) der Vorsteuerstufe (20) Teile des Mittenraums (64) begrenzen, der von der unteren freien Stirnseite des Vorsteuerkolbens (26) begrenzt ist, der dort mit den zugeordneten Gehäuseteilen (81) der Vorsteuerstufe (20) einen sitzdichten Ventilsitz (76) ausbildet.

2. Wegeventil nach Anspruch 1, **dadurch gekennzeichnet, dass** die Durchmesser der jeweiligen Einschraub-Gewindestrecken (28, 30, 32) ausgehend von dem Ventilgehäuse (10) in Richtung der Vorsteuerstufe (20) abnehmen.

3. Wegeventil nach Anspruch 1 oder 2, **dadurch gekennzeichnet, dass** der Hauptsteuerkolben (24) der Hauptsteuerstufe (18) mindestens zwei Kanalführungen (36, 38) aufweist, die jeweils mit einem Ventil, vorzugsweise in Form eines Rückschlagventils (40, 42) versehen, den jeweils höchsten Fluiddruck von zwei Fluidanschluss-Stellen (12, 14) des Ventilgehäuses (10), die mittels des Hauptsteuerkolbens (24) voneinander separierbar sind, in einen Entlastungsraum (50) weiterleiten, der über die Zwischenstufe (22) bei betätigter Vorsteuerstufe (20) an die dritte Fluidanschluss-Stelle (16) angeschlossen ist, die vorzugsweise einen Tank- oder Umgebungsdruck aufweist.

4. Wegeventil nach Anspruch 3, **dadurch gekennzeichnet, dass** die paarweise miteinander an der zuordenbaren Knickstelle (62) verbundenen Kanalabschnitte einen Umgehungskanal (66, 68) ausbilden, der mit seinem einen freien Ende in den Entlastungsraum (50) ausmündet und mit seinem anderen freien Ende in einen Vorsteuerraum (78) der Vorsteuerstufe (20).

5. Wegeventil nach Anspruch 4, **dadurch gekennzeichnet, dass** der Vorsteuerraum (78) der Vorsteuerstufe (20) über mindestens eine Blende oder Drossel (82) permanent fluidführend mit einem Kolbenraum (84) des Vorsteuerkolbens (26) verbunden ist, der von einem Betätigungsteil (86) eines Magnetsystems (88) durchgriffen, bei dessen Betätigung einen fluidführenden Weg zwischen Vorsteuerraum und Mittenraum (64) der Zwischenstufe (22) freigibt.

6. Wegeventil nach einem der vorstehenden Ansprüche, **dadurch gekennzeichnet, dass** der Vorsteuerkolben (26) an seiner einen freien Stirnseite, die dem Mittenraum (64) zugewandt ist, einen dahingehend ausmündenden Verbindungskanal (90) aufweist, der auf seiner dem Betätigungsteil des Magnetsystems (88) zugewandten Seite in eine Blenden- oder Drosselstelle (92) ausmündet, die im unbetätigten Zustand des Magnetsystems (88) von dem Betätigungsteil (86) verschließbar ist.

7. Wegeventil nach einem der vorstehenden Ansprüche, **dadurch gekennzeichnet, dass** der Mittenraum (64) der Zwischenstufe (22) in einen Querkanal (72) ausmündet, der endseitig jeweils an eine Stufe des Zwischenstufengehäuses aus- und in jeweils einen Längskanal (74) des Ventilgehäuses (10) einmündet, der an die dritte Fluidanschluss-Stelle (16) permanent angeschlossen ist.

8. Wegeventil nach einem der vorstehenden Ansprüche, **dadurch gekennzeichnet, dass** die Flächenübersetzung von Hauptsteuer- (24) und Vorsteuerkolben (26) jeweils derart gewählt ist, dass die Summe der druckwirksamen Kolbenflächen auf der Vorderseite des jeweiligen Steuerkolbens der druckwirksamen Gesamtfläche auf der Rückseite dieses Steuerkolbens entspricht.

## Claims

1. Pilot-controlled directional valve, in particular directional seat valve, with a valve housing (10), with at least three fluid connection points (12, 14, 16) with a main control stage (18) and a pilot stage (20) wherein, between the main control stage (18) and the pilot control stage (20), a further fluid-controlling intermediate stage (22) is arranged, wherein the main control stage (18) comprises a longitudinally movable main control piston (24) and the pilot stage (20) comprises a longitudinally movable pilot piston (26), wherein the intermediate stage (22) comprises individual channel sections (54, 56; 58, 60), which meet in pairs at a sharp bend or other deflection point (62), in such a way as to create room for a centre space (64), which is connected to the third fluid connection point (16), to be permanently fluid-carrying, and can be closed by the pilot piston (26) of the pilot stage (20), **characterised in that** the valve housing (10) can be accommodated in a valve block with fluid passages as a type of screw-in cartridge, which can be brought in fluid-carrying coverage with the fluid connection points (12, 14, 16) of the valve housing (10), in which the intermediate stage (22) can be integrated as a type of additional, second screw-in cartridge, that the pilot stage (20) can be secured in the intermediate stage (22) as a type of a further third screw-in cartridge and the wall parts of a housing (81) of the pilot stage (20) delimit the centre space (64), which is further bound by the lower free end face of the pilot piston (26) which there, with the associated housing parts (81) of the pilot stage (20), forms a leak-proof valve seat (76).

2. Directional control valve in accordance with claim 1, **characterised in that** the diameter of the respective screw-in threaded portions (28, 30, 32) reduce, starting from the valve housing (10), in the direction of the pilot stage (20).

3. Directional control valve in accordance with claim 1 oder 2, **characterised in that** the main control piston (24) of the main control stage (18) has at least two channel passages (36, 38), each with a valve, preferably in the form of a check valve (40, 42), which convey the respective maxumum fluid pressure from two fluid connection points (12, 14) of the valve housing (10), which are separable from one another by means of the main control piston (24), into a discharge chamber (50), which is connected via the intermediate stage (22) with actuated pilot stage (20) to the third fluid connection point (16), which is preferably at a tank or ambient pressure.

4. Directional control valve in accordance with claim 3, **characterised in that** pair of channel sections together connected to the associated sharp bend (62) form a bypass channel (66, 68) which, with it one free end, opens into the discharge chamber (50) and, with its other free end, into a pilot chamber (78) of the pilot stage (20).

5. Directional control valve in accordance with claim 4, **characterised in that** the pilot chamber (78) of the pilot stage (20) is connected, permanently fluid-carrying, via at least one restrictor or throttle (82) to a piston chamber (84) of the pilot piston (26), which is penetrated by an actuating member (86) of a magnet system (88), on the actuation of which, a fluid-carrying route between pilot chamber and middle chamber (64) of the intermediate stage (22) is opened.

6. Directional control valve in accordance with one of the preceding claims, **characterised in that** the pilot piston (26), has at its free end face, which faces the middle chamber (64), such an opening connecting channel (90) which, on its side facing the actuating part of the magnet system (88), opens into a restrictor or throttle point (92), which can be closed in the unoperated state of the magnet system (88) by the actuating member (86).

7. Directional control valve in accordance with one of the preceding claims, **characterised in that** the middle chamber (64) of the intermediate stage (22) opens into a transverse channel (72), which at its end opens out to a stage of the intermediate stage housing and opens into a longitudinal channel (74) of the valve housing (10), which is permanently connected to the third fluid connection point (16).

8. Directional control valve in accordance with one of the preceding claims, **characterised in that** die surface area ratio of main control piston (24) and pilot control piston (26) is chosen so that the total of pressure-applying areas on the front of the respective piston pilot piston corresponds to the pressure-applying total area on the rear of this pilot piston.

## Revendications

1. Distributeur piloté, notamment distributeur à siège, comprenant un corps (10) de distributeur ayant au moins trois points (12, 14, 16) de raccordement de fluide, ayant un étage (18) de commande principal et un étage (20) pilote, dans lequel un autre étage (22) intermédiaire commandant le fluide est disposé entre l'étage (18) de commande principal et l'étage (20) pilote, l'étage (18) de commande principal ayant un piston (24) de commande principal mobile longitudinalement et l'étage (20) pilote, un piston (26) pilote mobile longitudinalement, l'étage (22) intermédiaire ayant divers tronçons (54, 56; 58, 60) de conduit, qui se rencontrent par paire en un point (62) de coude ou d'autre déviation pour ménager ainsi de la place pour un espace (64) médian, qui est raccordé fluidiquement de manière permanente au troisième point (16) de raccordement de fluide et qui peut être fermé par le piston (26) pilote de l'étage (20) pilote, **caractérisé en ce que** l'enveloppe (10) du distributeur peut être reçue à la manière d'une cartouche à visser dans un bloc de distributeur ayant des conduits pour du fluide, qui peuvent être mis en coïncidence fluidiquement avec les points (12, 14, 16) de raccordement de fluide de l'enveloppe (10) du distributeur, dans laquelle l'étage (22) intermédiaire peut être intégré à la manière d'une autre deuxième cartouche à visser, **en ce que** l'étage (20) pilote peut être fixé dans l'étage (22) intermédiaire à la manière d'une autre troisième cartouche à visser et **en ce que** des parties de paroi d'une enveloppe (81) de l'étage (20) pilote délimitent des parties de l'espace (64) médian, qui est délimité par le côté frontal libre inférieur du piston (26) pilote, qui y constitue, avec les parties (81) de boîtier associées de l'étage (20) pilote, un siège (76) de distributeur étanche.

2. Distributeur suivant la revendication 1, **caractérisé en ce que** le diamètre des sections (28, 30, 32) filetées à visser respectives diminue à partir de l'enveloppe (10) du distributeur en direction de l'étage (20) pilote.

3. Distributeur suivant la revendication 1 ou 2, **caractérisé en ce que** le piston (24) de commande principal de l'étage (18) de commande principal a au moins deux conduits (36, 38), pourvus chacun d'une soupape, de préférence sous la forme d'un clapet (40, 42) antiretour, qui acheminent, dans un espace (50) de détente, la pression de fluide respectivement la plus grande de deux points (12, 14) de raccordement de fluide de l'enveloppe (10) du distributeur, qui peuvent être séparés l'un de l'autre au moyen du piston (24) de commande principal, espace (50), qui est raccordé, par le deuxième étage (22) intermédiaire, lorsque l'étage (20) pilote est actionné, au troisième point (16) de raccordement de fluide, qui a de préférence une pression de réservoir ou ambiante.

4. Distributeur suivant la revendication 3, **caractérisé en ce que** les tronçons de conduit, reliés entre eux par paire au point (62) de coude pouvant être associé, constituent un conduit (66, 68) de contournement, qui débouche, par l'une de ses extrémités libres, dans l'espace (50) de détente et par son autre extrémité libre, dans un espace (78) pilote de l'étage (20) pilote.

5. Distributeur suivant la revendication 4, **caractérisé en ce que** l'espace (78) pilote de l'étage (20) pilote communique par au moins un diaphragme ou un étranglement (82) fluidiquement de manière permanente avec un espace (84) du piston (26) pilote, dans lequel passe une partie (86) d'actionnement d'un système (88) à aimant, dont l'actionnement dégage un trajet fluidique entre l'espace pilote et l'espace (64) médian de l'étage (22) intermédiaire.

6. Distributeur suivant l'une des revendications précédentes, **caractérisé en ce que** le piston (26) pilote a à l'un de ses côtés frontaux libres, qui est tourné vers l'espace (64) médian, un conduit (90) de liaison débouchant dans ce sens, qui débouche, sur son côté tourné vers la partie d'actionnement du système (88) à aimant, dans un point (92) de diaphragme ou d'étranglement, qui, à l'état non actionné du système (88) à aimant, peut être fermé par la partie (86) d'actionnement.

7. Distributeur suivant l'une des revendications précédentes, **caractérisé en ce que** l'espace (64) médian de l'étage (22) intermédiaire débouche dans un conduit (72) transversal, qui débouche du côté de l'extrémité respectivement sur un étage de l'enveloppe d'étage intermédiaire et dans respectivement un conduit (74) longitudinal de l'enveloppe (10) du distributeur, qui est raccordé de manière permanente au troisième point (16) de raccordement de fluide.

8. Distributeur suivant l'une des revendications précédentes, **caractérisé en ce que** la transition de surface du piston (24) de commande principal et du piston (26) pilote est choisie de manière à ce que la somme des surfaces de piston efficaces du point de vue de la pression, du côté avant du piston de commande respectif, corresponde à la surface totale efficace du point de vue de la pression du côté arrière de ce piston de commande.
